# EUROPÄISCHE PATENTSCHRIFT

(11) **EP 0 607 488 B1**
(45) Veröffentlichungstag und Bekanntmachung des Hinweises auf die Patenterteilung: **09.08.1995**
(21) Anmeldenummer: 93100941.9
(22) Anmeldetag: 22.01.1993
(51) Int. Cl.: A01C 1/04

(54) **Gerafftes Pflanznetz**
Shirred net for plants
Filet plissé pour plantes

(43) Veröffentlichungstag der Anmeldung: 27.07.1994
(73) Patentinhaber: JÜNEMANN, Ulrich, D-34119 Kassel (DE)
(72) Erfinder: JÜNEMANN, Ulrich, D-34119 Kassel (DE)
(74) Vertreter: Rehberg, Elmar, Dipl.-Ing.

(56) Entgegenhaltungen:
- FR-A- 1 147 782
- FR-A- 2 592 007
- NL-A- 9 100 478

## Beschreibung

Die Erfindung bezieht sich auf ein gerafftes Pflanznetz für die Aufzucht von Blumenzwiebeln, insbesondere Tulpen, Narzissen u. dgl., mit einem im Transportzustand flachliegenden Stützkörper und einem von diesem aufgenommenen Netzschlauch, der von mindestens einer Banderole auf dem Stützkörper fixiert ist, wobei die Banderole in Achsrichtung des Netzschlauches den Innenraum des Netzschlauches und des Stützträgers durchsetzt und sich auch über die Außenseite des Netzschlauches erstreckt.

Bei der Aufzucht von Blumenzwiebeln, insbesondere Tulpen, Narzissen, Iris u. dgl. werden bekanntlich die zur Aufzucht bzw. Vermehrung der Blumenzwiebeln bestimmten Blumenzwiebeln in die Erde gebracht. Nach einer gewissen Wachstumsperiode wird die Blume abgeschlagen, damit sich während der fortgesetzten Wachstumsperiode die Zwiebel kräftigt bzw. durch Bildung von Nachbarzwiebeln vermehrt.

Zum Ausbringen der Blumenzwiebeln in die Erde ist es bekannt, ein Pflanznetz zu benutzen, dessen wesentlicher Bestandteil ein Netzschlauch ist, der insbesondere aus gerascheltem Material bestehen kann und eine Länge von bis zu etwa 400 m besitzen kann. Dieser Netzschlauch wird in Achsrichtung verkürzt zusammengerafft und vom Hersteller des Netzschlauches auf einem flachliegenden Stützträger aufgebracht. Als Stützträger sind zwei Pappstücke identischen Umrisses, etwa in Rechteckformat, bekannt, die flach aufeinanderliegend den Stützträger bilden. Nachdem das geraffte Netz auf den Stützträger aufgebracht ist, wird jedes Pappstück des Stützträgers in eine Banderole derart eingeschlossen, daß das Pappstück und der außenliegende Teil des Netzschlauches des Pflanznetzes jeweils von der Banderole umgeben sind. Solche Banderolen werden manchmal auch als Manschetten bezeichnet. Sie bestehen in der Regel aus einem Stück Kunststoffolie, welches seinerseits in einen ringförmigen Zustand gebracht worden ist, indem seine beiden Enden miteinander verbunden wurden. In diesem fixierten Zustand, flachliegend und durch die Banderolen gepreßt gehalten, wird das Pflanznetz von dem Hersteller zum Anwender für die Aufzucht der Blumenzwiebeln geliefert. Bei der Ausbringung der Blumenzwiebeln in die Erde ist es zunächst erforderlich, das Pflanznetz auf einen Netzträger einer Pflanzmaschine aufzubringen. Der bekannte Netzschlauch weist einen Umfang von etwa 1,6 m auf, so daß der Stützträger eine Breite von 0,8 m besitzt. Nach dem Entfernen der Banderolen werden die beiden Pappstücke des Stützträgers bogenförmig aufgeweitet, und das Pflanznetz wird in diesem Zustand auf den Netzträger der Pflanzmaschine aufgeschoben. Die Handhabbarkeit des bekannten Pflanznetzes ist schlecht. Es bereitet erhebliche Mühe, das Pflanznetz auf den Netzträger aufzuschieben, so daß dieses seinen ordnungsgemäßen und korrekten Sitz auf dem Netzträger der Pflanzmaschine bekommt. Diese Schwierigkeiten können am besten dadurch verdeutlicht werden, daß bei dem bekannten Pflanznetz das Aufbringen des Pflanznetzes auf den Netzträger der Pflanzmaschine selbst bei Einsatz von geübtem Personal etwa den gleichen Zeitraum in Anspruch nimmt wie das nachfolgende Pflanzen der Blumenzwiebeln unter Aufbrauch des aufgeschobenen Netzschlauches. Mit anderen Worten sind 50 % der Arbeitszeit bei jedem Netzschlauch als Rüstzeit zu berücksichtigen. An das Aufbringen des Netzschlauches bzw. Pflanznetzes auf den Netzträger der Pflanzmaschine schließt sich das eigentliche Ausbringen der Blumenzwiebeln an. Die Blumenzwiebeln werden in das Innere des Netzschlauches bei dessen Ablauf von dem Netzträger eingebracht, und der in den Boden eingebrachte Netzschlauch wird mit Erde bedeckt bzw. behäufelt. In der sich anschließenden Wachsperiode wachsen aus den Blumenzwiebeln die Pflanzen durch den Netzschlauch hindurch, wobei sie auch das aufgehäufelte Erdreich durchstoßen. Am Ende der Wachstumsperiode bei der Ernte der Blumenzwiebeln wird zunächst die aufgehäufelte Erde entfernt und sodann der Netzschlauch mit den darin befindlichen Blumenzwiebeln aus dem Erdreich gezogen und von einer fahrbaren Erntemaschine aufgenommen. Dabei wird der Netzschlauch parallel zu seiner Achsrichtung längs aufgeschlitzt, und die Blumenzwiebeln werden aus dem nun zugänglich gewordenen Inneren des Netzschlauches übernommen, gereinigt und in Container aufgenommen. Das weitere Sortieren, Abpacken und Verbringen der Blumenzwiebeln zum Letztanwender ist bekannt.

Bei einem anderen bekannten Pflanznetz wird ebenfalls ein Stützträger aus zwei parallelen, miteinander nicht verbundenen Pappstücken benutzt. Je zwei Bindfäden ersetzen bzw. bilden je eine Banderole. Die Handhabung dieses Pflanznetzes ist vergleichsweise noch mehr erschwert, da der Netzschlauch zwischen den Bindfäden ausbaucht und damit das Aufschieben auf den Netzträger der Pflanzmaschine noch schwieriger durchzuführen ist.

Es sind auch Pflanznetze bekannt, die auf die Verwendung von Stützträgern gänzlich verzichten und bei denen lediglich zwei Manschetten oder Banderolen in der schon beschriebenen Art und Weise vorgesehen sind, um den Netzschlauch gerafft zu halten.

Da die bekannten Pflanznetze nur eine Breite von etwa 0,8 m aufweisen, entstehen zwischen den einzelnen Streifen der im Erdboden verlegten Netze Zwischenstreifen, in denen keine Blumenzwiebeln wachsen, so daß die Effektivität dieses Anbaus entsprechend beschränkt ist. Die Anwendung breiterer Pflanznetze könnte zwar die Effektivität steigern, die Handhabbarkeit, insbesondere das Aufschieben auf den Netzträger der Pflanzmaschine, wäre jedoch bei einem breiten Pflanznetz noch schlechter.

Der Erfindung liegt die Aufgabe zugrunde, ein Pflanznetz der eingangs beschriebenen Art so weiterzubilden bzw. auszustatten, daß es Vergleichsweise schneller auf den Netzträger der Pflanzmaschine aufgeschoben werden kann, so daß das Verhältnis von Rüstzeit zu Arbeitszeit günstiger wird.

Erfindungsgemäß wird dies bei dem Pflanznetz der eingangs beschriebenen Art dadurch erreicht, daß der Stützträger aus einem ringförmigen Zuschnitt aus Pappe, Karton o. dgl. besteht, der parallel zur Achsrichtung des Netzschlauches Falzungen zum gezielten Aufrichten des Stützträgers mit dem darauf sitzenden Netzschlauch und dem Aufschieben in geöffnetem Zustand auf einen Netzträger einer Pflanzmaschine aufweist. Statt einem undefinierten Aufrichten des Stützkörpers durch elipsenartiges Aufbauchen der beiden Pappzuschnitte im Stand der Technik wird es nunmehr möglich, daß der Stützträger nicht nur eine Funktion in flachliegendem Zustand erfüllt, nämlich das Halten des Netzschlauches während des Transportes; es wird vielmehr die Möglichkeit geschaffen, daß der Stützträger beim Aufrichten sich selbst und den darauf sitzenden Netzschlauch in eine solche Form bringt, die der Formgebung des Netzträgers auf der Pflanzmaschine entspricht. Damit wird erreicht, daß sich ein solches Pflanznetz auch von Hilfspersonal in vergleichsweise kurzer Zeit auf den Netzträger der Pflanzmaschine aufsetzen läßt. Das Verhältnis von Rüstzeit zu Arbeitszeit, welches im Stand der Technik 50 zu 50 betrug, beträgt jetzt etwa 10 zu 90. Beim Aufrichten des Stutzträgers in den geöffneten Zustand stützen sich die Bereiche des ringförmigen Zuschnitts aus Pappe, Karton o. dgl. verläßlich aneinander ab, und ein undefiniertes Aufrichten wird vermieden. Der Stützkörper knickt gleichsam nur dort ein, wo das Einknicken durch die Falzungen vorgegeben ist.

Die Falzungen können über den Umfang des ringförmigen Zuschnittes so verteilt angeordnet sein, daß beim Öffnen des Stützträgers und des Netzschlauches Rechteckform entsteht. Dies gilt für den Fall, daß der Netzträger der Pflanzmaschine eben diese Rechteckform besitzt. Die Rechteckform wird bevorzugt angewendet, weil mit ihr bereits die beiden Großflächen des Netzschlauches gleichsam vorgebildet werden, mit denen diese dann parallel zum Erdboden in das Erdreich eingebracht werden.

Der Zuschnitt kann aus Wellpappe bestehen, wobei jedoch die Laufrichtung der Welle parallel zur Achsrichtung des Netzschlauches angeordnet sein sollte, damit insbesondere die beiden Großflächen des Stützträgers in Richtung quer zur Achsrichtung des Netzschlauches die erforderliche Stabilität bekommen und ein unbeabsichtigtes Einknicken im Bereich der Großflächen vermieden wird. Unter der Laufrichtung der Welle wird die Richtung verstanden, in der die Wellpappe aus dem Wellaggregat ausläuft. Mit anderen Worten erstrecken sich die durch die gewellte Bahn gebildeten Röhren der Wellpappe quer zur Achsrichtung des Netzschlauches.

Der ringförmige Zuschnitt kann in einem Bereich zwischen zwei benachbarten Falzungen doppellagig ausgebildet oder mit Einlagen versehen sein. In der einfachsten Ausführungsform wird der Stützträger aus einem zusammenhängenden Zuschnitt gebildet, dessen beide Enden miteinander verbunden werden. Dabei ist es ohne weiteres möglich, den Zuschnitt so zu gestalten, daß an der Verbindungsstelle das Material des Stützkörpers doppellagig entsteht, welches einmal zur Verbindung der Enden des ringförmigen Zuschnitts dient und zum anderen der Aussteifung einer Kleinfläche. Für eine symmetrische Ausbildung ist es dann zweckmäßig, die andere Kleinfläche mit einer Einlage zu versehen, um auch hier die Doppellagigkeit zu erreichen.

Ein wesentlicher Vorteil des erfindungsgemäßen Pflanznetzes besteht darin, daß es auch größere Netzbreiten, bis hin zu einer Netzbreite von etwa 1,6 m, also entsprechend einem Umfang von 3,2 m, zuläßt, so daß die Blumenzwiebeln auf einem vergleichsweise breiten zusammenhängenden Pflanzstreifen ausgebracht werden können. Selbst solche breiten Pflanznetze lassen sich gezielt und einfach handhaben und auf den Netzträger einer Pflanzmaschine aufsetzen. Bei solchen sehr breiten Pflanznetzen ist es vorteilhaft, wenn die freien Ränder des ringförmigen Zuschnitts abschnittweise mit Verstärkungen versehen sind. Diese Verstärkungen dienen dazu, die Stabilität der Großflächen des Stützträgers quer zur Achsrichtung des Netzschlauches gegen unbeabsichtigtes Einbeulen zu erhöhen.

Üblicherweise erstrecken sich die Banderolen über die Bereiche einer Großfläche und einer Kleinfläche des Stützträgers hinweg, so daß es vor dem Aufrichten des Stützträgers mit dem Netzschlauch erforderlich ist, die Banderolen von dem Pflanznetz zu lösen. Sofern die Banderolen jedoch nur parallel zu den Großflächen der Rechteckform angeordnet sind, tragen sie zur Stabilität der Großflächen bei und begünstigen damit das gezielte Aufrichten. Es wird dann möglich, die Banderolen erst nach dem Aufschieben des geöffneten Pflanznetzes auf den Netzträger der Pflanzmaschine zu durchtrennen oder zu entfernen.

Das erfindungsgemäße Pflanznetz wird anhand bevorzugter Ausführungsformen weiter erläutert und beschrieben. Es zeigen:
- Figur 1: eine perspektivische Darstellung des Pflanznetzes flachliegendem Zustand,
- Figur 2: eine Stirnansicht des Stützträgers in flachliegendem Zustand,
- Figur 3: eine Stirnansicht des Stützträgers in geöffnetem Zustand,
- Figur 4: einen Schnitt durch einen Teil des Stützträgers parallel zur Achsrichtung des Netzschlauches,
- Figur 5: eine Stirnansicht des Stützträgers in geöffnetem Zustand,
- Figur 6: eine Stirnansicht eines weiteren Stützträgers in geöffnetem Zustand,
- Figur 7: eine Draufsicht auf einen Zuschnitt aus Karton, Pappe o. dgl. zur Bildung eines Stützträgers und
- Figur 8: eine Stirnansicht des gebildeten Stützträgers aus dem Zuschnitt gemäß Figur 7.

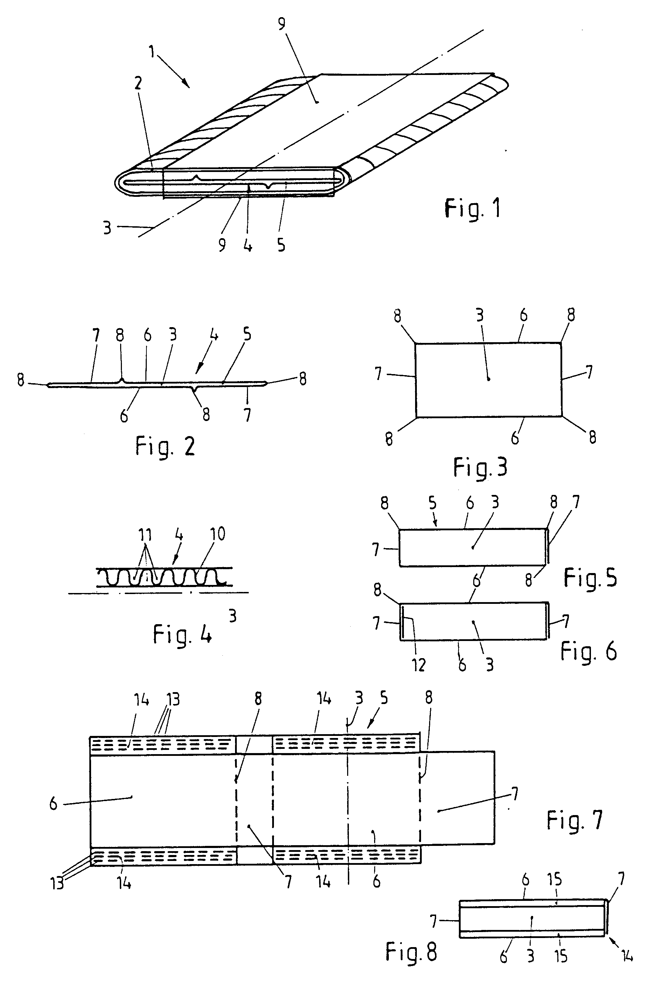

In Figur 1 ist das Pflanznetz 1 im flachliegenden Transportzustand dargestellt. Wesentlicher Bestandteil des Pflanznetzes 1 ist ein Netzschlauch 2, der als flachliegender Ring mit seiner Achse 3 in Achsrichtung zusammengerafft ist. Im Inneren des Netzschlauches 2 befindet sich ein Stützträger 4, der aus einem ringförmigen zusammenhängenden Zuschnitt 5 (Figur 2) besteht. Der Zuschnitt 5 weist zwei Großflächen 6 und zwei Kleinflächen 7 jeweils abwechseln aneinanderhängend auf, die durch Falzungen 8 begrenzt sind. Wie aus Figur 3 ersichtlich ist, läßt sich der Stützkörper 4 somit zur Rechteckform öffnen. Er ist in Richtung der Achse 3 damit durchgängig. In den Figuren 2 und 3 ist aus Gründen der Übersichtlichkeit der Netzschlauch weggelassen. Es versteht sich jedoch, daß sich der Netzschlauch 2 um den Stützkörper 4 herum erstreckt. Der Netzschlauch 2 ist auf dem Stützkörper 4 weiterhin durch zwei Banderolen 9 (Figur 1) gehalten. Jede Banderole 9 kann aus einem Streifen Kunststoffolie bestehen, der sich durch den Innenraum des Stützträgers 4 in Richtung der Achse 3 hindurch erstreckt und über die beiden Stirnseiten des Stützträgers 4 und des Pflanznetzes 2 so verläuft, daß letztlich auch die jeweilige Außenseite des Netzschlauches 2 umschlossen ist. Es versteht sich, daß die beiden Enden jedes Kunststoffstreifens der Banderole miteinander verbunden, beispielsweise verschweißt sind. Solche Banderolen sind bekannt. Manchmal werden sie auch von zwei Bindfäden ersetzt, die in der schon beschriebenen Weise den Innenraum des Stützträgers 4 durchsetzen und sich über die jeweilige Außenseite des Netzschlauches 2 erstrecken.

Das Pflanznetz 1 wird in der aus Figur 1 ersichtlichen Ausstattung hergestellt und beim Hersteller des Netzschlauches 2 so ausgestattet und an den Anwender ausgeliefert. Dieser entfernt die beiden Banderolen 9 vor dem Aufbringen auf dem Netzträger der Pflanzmaschine. Dabei wird das Pflanznetz 1 mit dem Stützträger 4 und dem Netzschlauch 2 so aufgerichtet, wie dies Figur 3 verdeutlicht. In dieser aufgerichteten, geöffneten Stellung wird der Stützträger 4 mitsamt dem Netzschlauch 2 auf den Netzträger der Pflanzmaschine aufgeschoben. Von dort läuft der Netzschlauch dann von der über das Feld bewegten Pflanzmaschine in das Erdreich ab, wobei die Blumenzwiebeln in das Innere des ablaufenden Netzschlauches abgegeben werden.

Insbesondere bei relativ breiten Netzschläuchen 2 in der Größenordnung über 1 m Breite ist es sinnvoll, die Großflächen 6 so stabil auszubilden, daß sie beim Aufrichten des Netzschlauches nicht unbeabsichtigt einknicken. Eine hierzu geeignete Maßnahme zur Steigerung der Querstabilität ist die Verwendung von Wellpappe und die Anordnung der Welle 10 (Figur 4) parallel zur Richtung der Achse 3. Die zwischen der Welle 10 und den Deckbahnen gebildeten Röhren 11 erstrecken sich damit quer zur Richtung der Achse 3 entsprechend der Breite des Netzschlauches 2.

Weitere Maßnahmen zur Erhöhung der angesprochenen Stabilität insbesondere der Großflächen 6, aber auch der Kleinflächen 7 sind aus den Figuren 5 bis 8 erkennbar. Gemäß Figur 5 wird der Zuschnitt 5 für den Stützträger 4 um eine Kleinfläche 7 länger gewählt, so daß die eine Kleinfläche 7 doppellagig erscheint. Hier kann zugleich die Verbindung, insbesondere Verklebung des Materials des Stützkörpers 4 erfolgen. Figur 6 zeigt eine Ausführungsform, bei der im Bereich beider Kleinflächen 7 Doppellagigkeit erzielt worden ist. Zu diesem Zweck ist im Bereich der anderen Kleinfläche 7 eine Einlage 12 vorgesehen, die mit dem durchgehenden Material des Zuschnitts 5 verklebt oder verklammert sein kann. Auch das ringförmige Schließen des Zuschnittes 5 kann durch Verklammerung geschehen.

Aus dem in Figur 7 dargestellten Zuschnitt 5 läßt sich der in Figur 8 in Stirnansicht und geöffnetem Zustand geöffnete Stützträger 4 erstellen. Die Besonderheit besteht darin, daß seitlich im Bereich der Großflächen 6 mit Rillierungen 13 versehene Abschnitte 14 vorgesehen sind, die quer zur Richtung der Achse 3 zu rohrenförmigen Gebilden aufrollbar sind, so daß letztendlich Verstärkungen 15 gebildet werden, die im Sinne einer Verhinderung des unbeabsichtigten Einknickens der Großflächen 6 wirken. Dies ist insbesondere dann der Fall, wenn die Großflächen 6 sehr viel breiter als die Kleinflächen 7 ausgebildet sind. Eine solche Formgebung des Netzträgers der Pflanzmaschine ist zur Ausnutzung der maximal möglichen Netzbreite sinnvoll.

### BEZUGSZEICHENLISTE

- 1: - Pflanznetz
- 2: - Netzschlauch
- 3: - Achse
- 4: - Stützträger
- 5: - Zuschnitt
- 6: - Großfläche
- 7: - Kleinfläche
- 8: - Falzung
- 9: - Banderole
- 10: - Welle
- 11: - Röhre
- 12: - Einlage
- 13: - Rillierung
- 14: - Abschnitt
- 15: - Verstärkung

## Patentansprüche

1. Gerafftes Pflanznetz für die Aufzucht von Blumenzwiebeln, insbesondere Tulpen, Narzissen und dgl., mit einem im Transportzustand flachliegenden Stützträger (4) und einem von diesem aufgenommenem Netzschlauch (2), der von mindestens einer Banderole (9) auf dem Stützträger (4) fixiert ist, wobei die Banderole (9) in Achsrichtung (3) des Netzschlauches (2) den Innenraum des Netzschlauches (2) und des Stützträgers (4) durchsetzt und sich auch über die Außenseite des Netzschlauches erstreckt, dadurch gekennzeichnet, daß der Stützträger (4) aus einem ringförmigen Zuschnitt (5) aus Pappe, Karton oder dgl. besteht, der parallel zur Achsrichtung (3) des Netzschlauches (2) Falzungen (8) zum gezielten Aufrichten des Stützträgers (4) mit dem daraufsitzenden Netzschlauch (2) und dem Aufschieben in geöffnetem Zustand auf einen Netzträger einer Pflanzmaschine aufweist.

2. Pflanznetz nach Anspruch 1, dadurch gekennzeichnet, daß die Falzungen (8) über den Umfang des ringförmigen Zuschnittes (5) so verteilt angeordnet sind, daß beim Öffnen des Stützträgers (4) und des Netzschlauches (2) Rechteckform entsteht.

3. Pflanznetz nach Anspruch 1 oder 2, dadurch gekennzeichnet, daß der Zuschnitt (5) aus Wellpappe besteht und die Laufrichtung der Welle (10) parallel zur Achsrichtung (3) des Netzschlauches angeordnet ist.

4. Pflanznetz nach einem oder mehreren der Ansprüche 1 bis 3, dadurch gekennzeichnet, daß der ringförmige Zuschnitt (5) mindestens in einem Bereich zwischen zwei benachbarten Falzungen (8) doppellagig ausgebildet oder mit Einlagen (12) versehen ist.

5. Pflanznetz nach einem oder mehreren der Ansprüche 1 bis 4, dadurch gekennzeichnet, daß die freien Ränder des ringförmigen Zuschnittes (5) abschnittweise mit Verstärkungen (15) versehen sind.

6. Pflanznetz nach den Ansprüchen 1 und 2, dadurch gekennzeichnet, daß die Banderolen (9) parallel zu den Großflächen (6) der Rechteckform angeordnet sind.

## Claims

1. A shirred net for plants for the cultivation of flower bulbs, especially tulips, narcissi and such, with a carrier (4) lying flat in the transport state and a tubular net (2) provided thereon, which is held on the carrier (4) with at least one closing band (9), where the closing band (9) penetrates the interior of the tubular net (2) and of the carrier (4) in the direction of an axis (3) of the tubular net (2) and also extends over the outside of the tubular net, **wherein** the carrier (4) consists of a ring-shaped cutting (5) of cardboard, carton or the like, which has folds (8) parallel to the direction of the axis (3) of the tubular net (2) for the defined setting up of the carrier (4) with the tubular net (2) provided thereon and for mounting the carrier (4) in the opened state onto a net carrier of a planting machine.

2. Net for plants according to claim 1, **wherein** the folds (8) are distributed over the circumference of the ring-shaped cutting (5) so that a rectangular shape is obtained when opening the carrier (4) and the tubular net (2).

3. Net for plants according to claim 1 or 2, **wherein** the cutting (5) consists of corrugated board and the direction of the flute is arranged parallel to the direction of the axis (3) of the tubular net (2).

4. Net for plants according to one or more of the claims 1 to 3, **wherein** the ring-shaped cutting (5) is provided in two layers or with inserts (12) at least in an area between two neighboring folds.

5. Net for plants according to one or more of the claims 1 to 4, **wherein** the free edges of the ring-shaped cutting (5) are sectionally provided with reinforcements (15).

6. Net for plants according to claims 1 and 2, **wherein** the closing bands (9) are arranged parallel to the larger area (6) of the rectangular shape.

## Revendications

1. Filet de plantation comprimé pour la culture d'oignons à fleurs, en particulier tulipes, narcisses et autres, avec un support d'appui (4) disposé à plat dans l'état de transport et un filet tubulaire (2) reçu sur ce support, qui est fixé sur le support par au moins une banderole (9), la banderole (9) traversant dans le sens axial (3) du filet tubulaire (2) l'espace intérieur du filet tubulaire (2) et du support d'appui (4) et s'étendant aussi sur la face externe du filet tubulaire,
**caractérisé** en ce que le support d'appui (4) est constitué par une pièce découpée annulaire (5) en carton ou autre, qui présente parallèlement au sens axial (3) du filet tubulaire (2) des pliures (8) pour le montage voulu du support d'appui (4), avec le filet tubulaire (2) reposant sur celui-ci et pour l'enfilage voulu à l'état ouvert sur un porte-filet d'une machine à planter.

2. Filet de plantation selon la revendication 1, caractérisé en ce que des pliures (8) sont réparties sur le pourtour de la pièce découpée annulaire (5) de telle sorte que lors de l'ouverture du support d'appui (4) et du filet tubulaire (2) il se produit une forme rectangulaire.

3. Filet de plantation selon la revendication 1 ou 2, caractérisé en ce que la pièce découpée (5) est en carton ondulé et que la cannelure (10) s'étend parallèlement au sens axial (3) du filet tubulaire (2).

4. Filet de plantation selon une ou plusieurs des revendications 1 à 3, caractérisé en ce que la pièce découpée annulaire (5) est en deux couches, tout au moins dans une région entre deux pliures (8) voisines, ou bien est munie de semelles intérieures (12).

5. Filet de plantation selon une ou plusieurs des revendications 1 à 4, caractérisé en ce que les bords libres de la pièce découpée annulaire (5) sont munis par sections de renforcements (15).

6. Filet de plantation selon les revendications 1 et 2, caractérisé en ce que les banderoles (9) sont disposées parallèlement aux grandes faces (6) de la forme rectangulaire.
